# EUROPÄISCHE PATENTANMELDUNG

(11) **EP 4 356 795 A1**
(43) Veröffentlichungstag der Anmeldung: **24.04.2024**
(21) Anmeldenummer: 23204303.4
(22) Anmeldetag: 18.10.2023
(51) Int. Cl.: A47J 31/52

(54) **VERFAHREN ZUM BETREIBEN EINES KAFFEEAUTOMATEN**

(30) Priorität: 20.10.2022 DE 102022211153
(71) Anmelder: BSH Hausgeräte GmbH, 81739 München (DE)
(72) Erfinder: Nerbl, Christian, 83512 Wasserburg am Inn (DE); Frank, Theresa, 83236 Übersee (DE); Marchner, Maximilian, 83342 Tacherting (DE)

(57) **Zusammenfassung**

Die vorliegende Erfindung betrifft ein Verfahren zum Betreiben eines Kaffeeautomaten (1), welcher im Betrieb Kaffeegetränke zubereitet.

Eine erhöhte Variabilität der Zubereitung der Kaffeegetränke sowie eine erhöhte Qualität der zubereiteten Kaffeegetränke werden dadurch erreicht, dass die Zubereitung des Kaffeegetränks mittels eines Trestermodels simuliert und aus der Simulation zumindest ein Simulationsparameter ermittelt wird, wobei der Kaffeeautomat (1) abhängig vom Simulationsparameter betrieben wird.

Die Erfindung betrifft zudem ein Computerprogrammprodukt zum Ausführen des Verfahrens sowie einen derart betriebenen Kaffeeautomaten (1).

## Beschreibung

Die vorliegende Erfindung betrifft ein Verfahren zum Betreiben eines Kaffeeautomaten zur Zubereitung von Kaffeegetränken aus Kaffeepulver. Die Erfindung betrifft ferne ein zum Ausführen des Verfahrens ausgestaltetes Computerprogrammprodukt sowie einen derart betriebenen Kaffeeautomaten.

Ein Kaffeeautomat bietet zur Zubereitung von Kaffeegetränken Parameter an, welche je nach Kaffeegetränk unterschiedlich eingestellt werden können. Zu diesen Parametern gehören beispielsweise ein Systemdruck des Kaffeeautomaten und/oder die Temperatur des zur Zubereitung verwendeten Wassers und dergleichen.

In der Zeitschrift "Matter", Volume 2, Issue 3 beschreibt der Artikel "Systematically Improving Espresso: Insights from Mathematical Modeling and Experiment" eine Modellierung von Parametern und deren Zusammenspiel bei der Zubereitung von Espresso als Kaffeegetränk.

In Kaffeeautomaten sind besagte Parameter üblicherweise fest eingestellt, insbesondere für ein bestimmtes Kaffeegetränk fest vorgegeben. Dies führt dazu, dass der Betrieb des Kaffeeautomaten eingeschränkt ist.

Es ist daher eine Aufgabe der vorliegenden Erfindung, ein verbessertes Verfahren zum Betreiben eines Kaffeeautomaten ein entsprechend ausgestaltetes Computerprogrammprodukt sowie einen derart betriebenen Kaffeeautomaten zu schaffen, bei welchen Nachteile des Standes der Technik ausgeräumt sind. Insbesondere beschäftigt sich die vorliegende Erfindung mit der Aufgabe, für das Verfahren, für das Computerprogrammprodukt sowie den Kaffeeautomaten verbesserte oder zumindest andere Ausführungsformen anzugeben, welche sich durch eine erhöhte Variabilität und/oder verbesserte Qualität auszeichnen.

Diese Aufgabe wird erfindungsgemäß durch den Gegenstand des unabhängigen Patentanspruchs gelöst. Vorteilhafte Ausführungsformen sind Gegenstand der abhängigen Ansprüche.

Grundidee ist demnach, die Zubereitung eines Kaffeegetränks mit einem Kaffeeautomaten mittels eines Trestermodels zu simulieren und den Kaffeeautomaten abhängig von mittels der Simulation ermittelten Parametern, nachfolgend auch als Simulationsparameter bezeichnet, zu betreiben. Das Trestermodel erlaubt eine einfache und zuverlässige Simulation der Zubereitung des Kaffeegetränks, sodass auf einfache und zuverlässige Weise Einfluss auf die tatsächliche Zubereitung des Kaffeegetränks genommen werden kann und/oder die Zubereitung des Kaffeegetränks auf einfache Weise überwacht werden kann. Somit werden neben einer variablen Einstellung der im Betrieb verwendeten Parameter, nachfolgend auch als Betriebsparameter bezeichnet, auch die Qualität der Zubereitung des Kaffeegetränks und mögliche Einflussnahmen während der Zubereitung des Kaffeegetränks verbessert und einem Benutzer ermöglicht, Betriebsparameter des Kaffeeautomaten auf einfache und zuverlässige Art vorzugeben. Besonders bevorzugt kann somit auch eine bestimmte zu erzielende Qualität des Kaffeegetränks mit möglichst geringem Einsatz an Ressourcen erzielt werden. Insbesondere kann durch einen geringeren Bedarf an Kaffeepulver bei gleichbleibender Qualität des Kaffeegetränks der Aufwand für die Produktion des Kaffees z.B. an CO2 und Wasser verringert werden und so ein besonders nachhaltiges Kaffeegetränk erzeugt werden.

Dem Erfindungsgedanken entsprechend wird beim Verfahren zum Betreiben des Kaffeeautomaten zur Zubereitung von Kaffeegetränken aus Kaffeepulver, die Zubereitung des Kaffeegetränks mittels eines Trestermodels simuliert. Aus der Simulation wird ferner zumindest ein Simulationsparameter der Zubereitung ermittelt. Dabei wird der Kaffeeautomat abhängig vom zumindest einen Simulationsparameter betrieben.

Das Trestermodel basiert auf der in dem Artikel "Systematically Improving Espresso: Insights from Mathematical Modeling and Experiment" aus der Zeitschrift Matter, Volume 2, Issue 3 beschriebenen Modellierung. Dieser Artikel ist auch unter dem Link "doi.org/10.1016/j.matt.2019.12.019" abrufbar. Das Trestermodel erlaubt die Ermittlung von Simulationsparametern auf Basis von vorgegebenen Daten und gemessenen Werten an einem Tresterbehälter des Kaffeeautomaten bei der Zubereitung des Kaffeegetränks. Bevorzugt wird dabei ein eindimensionales Trestermodel, also ein 1D-Trestermodel, verwendet, wobei das 1D-Trestermodel auf der im besagten Artikel beschriebene eindimensionale Modellierung basiert. Das Trestermodel verwendet hierbei mathematische und/oder numerische Ansätze.

Die Simulation erfolgt automatisiert und vorzugsweise mittels eines Computerprogrammprodukts, welches entsprechend ausgestaltet ist.

Das Computerprogrammprodukt kann im Kaffeeautomaten ausgeführt werden. Auch ist es vorstellbar, das Computerprogrammprodukt zumindest teilweise außerhalb des Kaffeeautomaten, insbesondere in einer Cloud, auszuführen.

Das Computerprogrammprodukt enthält vorteilhaft durch ein Computersystem auslesbare Anweisungen, derart, dass das Computersystem beim Ausführen des Computerprogrammprodukts das Verfahren ausführt. Das Computersystem kann dabei zumindest teilweise im Kaffeeautomaten, beispielsweise in einer Steuereinrichtung des Kaffeeautomaten, hinterlegt bzw. gespeichert sein.

Die Simulation der Zubereitung kann vor der Zubereitung, während der Zubereitung, insbesondere simultan mit der Zubereitung, oder nach der Zubereitung erfolgen.

Zu den Simulationsparametern gehören insbesondere ein Extraktionsgrad und/oder ein Konzentrationsgrad des Kaffeegetränks. Bevorzugt ist es somit, wenn mittels des Trestermodels ein Extraktionsgrad und/oder ein Konzentrationsgrad des Kaffeegetränks als Simulationsparameter ermittelt werden.

Zu den vorgegebenen Daten, nachfolgend auch als Eingangsdaten bezeichnet, gehören vorzugsweise statische Daten. Dies statische Daten sind vorteilhaft eine Mahlgradverteilung des Kaffeepulvers und/oder die Sorte der verwendeten Kaffeebohnen und/oder ein Systemdruck des Kaffeeautomaten.

Die Sorte der verwendeten Kaffeebohnen kann vom Kaffeeautomaten automatisch ermittelt und/oder durch Eingabe eines Benutzers festgelegt werden.

Die Mahlgradverteilung kann beispielsweise anhand der Einstellung einer Mühle des Kaffeeautomaten und/oder der Fertigungslinie von der Vermessung ermittelt werden.

Der Systemdruck entspricht vorteilhaft dem Brühdruck während der Zubereitung oder korreliert zumindest mit dieser.

Zu den Eingangsdaten gehören vorteilhaft dynamische Daten, also solche, welche sich während der Zubereitung ändern können. Zu den dynamischen Daten gehören vorteilhaft eine Pumpenleistung einer Pumpe des Kaffeeautomaten und/oder eine Flussmenge durch den Kaffeeautomaten und/oder die Temperatur, insbesondere des zur Zubereitung verwendeten Wassers.

Die Pumpenleistung korreliert vorteilhaft mit einem Flussmesssignal und kann beispielsweise über den Systemdruck und/oder mittels des Druckabfalls ermittelt werden.

Vorstellbar ist es, mittels der Simulation zu bestimmen, ob zumindest einer der wenigstens einen Simulationsparameter bei der Zubereitung des Kaffeegetränks als Betriebsparameter des Kaffeeautomaten erreicht werden kann. Ist dies der Fall, kann also der Betriebsparameter erreicht werden, wird die Zubereitung des Kaffeegetränks mit dem Betriebsparameter durchgeführt. Somit wird insbesondere vermieden, dass Betriebsparameter, welche bei der Zubereitung vom Kaffeeautomaten nicht erreicht werden, verwendet werden. Die Verwendung derartiger, nicht erreichbarer Betriebsparameter würde zu einer Zubereitung des Kaffeegetränks mit unerwünschter oder niedriger Qualität führen. Auf diese Weise wird also die Qualität der Zubereitung des Kaffeegetränks erhöht.

Denkbar ist es, dass ein Benutzer einen Parameter zur Zubereitung des Kaffeegetränks vorgibt. Derartige Parameter werden nachfolgend auch als Wunschparameter bezeichnet.

Bevorzugt ist es dabei, wenn mittels des Trestermodels und somit aus der Simulation ermittelt wird, ob das Kaffeegetränk mit dem Wunschparameter zubereitet werden kann. Vorzugsweise wird dabei der Wunschparameter als Simulationsparameter getestet und/oder verwendet. Kann der Wunschparameter bei Zubereitung verwendet werden, wird das Kaffeegetränk mit dem Wunschparameter als Betriebsparameter zubereitet. Andernfalls kann der Benutzer darüber informiert werden, dass der Wunschparameter nicht erreicht werden kann. Alternativ oder zusätzlich kann in diesem Fall ein erreichbarer und/oder vorgegebener Betriebsparameter bei der Zubereitung des Kaffeegetränks verwendet werden. Dies führt zu einer erhöhten Qualität der Zubereitung.

Die Simulation der Zubereitung mittels des Trestermodels erlaubt es ferner, den Betrieb des Kaffeeautomaten, insbesondere die Zubereitung eines Kaffeegetränks, zu überwachen.

Bevorzugt wird dabei die Simulation während der Zubereitung des Kaffeegetränks, vorzugsweise parallel zur Zubereitung des Kaffeegetränks, durchgeführt. Dies erlaubt es, die Simulation aufgrund der Eingangsdaten möglichst genau durchzuführen und somit die Überwachung zu verbessern.

Vorstellbar ist es, anhand der Überwachung aktiv Betriebsparameter anzupassen und/oder zu ändern.

Alternativ oder zusätzlich ist es vorstellbar, anhand der Überwachung einen Benutzer über den Verlauf der Zubereitung zu informieren, insbesondere Fehler in der Zubereitung mitzuteilen.

Vorteilhaft wird mittels des Trestermodels, also aus der Simulation, für den Betrieb des Kaffeeautomaten ein zulässiger Maximalwert zumindest eines Betriebsparameters ermittelt. Während der Zubereitung wird dabei ein Ist-Wert des Betriebsparameters überwacht. Wird der Maximalwert überschritten, so wird der Ist-Wert reduziert.

Dabei können Maximalwerte für beliebige Betriebsparameter ermittelt werden.

Vorteilhaft wird mittels des Trestermodels, also aus der Simulation, ein Maximalwert einer Flussgeschwindigkeit ermittelt und die Flussgeschwindigkeit beim Überschreiten des zugehörigen mittels des Trestermodels ermittelten Maximalwerts reduziert. Insbesondere kann dabei die Pumpenleistung reduziert werden. Auch ist es vorstellbar, die Pumpe des Kaffeeautomaten zu deaktivieren. Dies ist insbesondere dann der Fall, wenn der Maximalwert einem kritischen Wert entspricht, bei welchem eine Beschädigung und/oder Ausfall des Kaffeeautomaten droht.

Vorteilhaft wird mittels des Trestermodels, also aus der Simulation, ein Maximalwert eines Drucks im Kaffeeautomaten ermittelt und der Druck beim Überschreiten des Maximalwerts reduziert. Dabei kann die Heizleistung einer Heizung des Kaffeeautomaten und/oder die Pumpleistung entsprechend angepasst, insbesondere reduziert werden. Vorstellbar ist es dabei, die Heizung und/oder die Pumpe zu deaktivieren. Dies insbesondere dann vorteilhaft, wenn der Maximalwert einem kritischen Wert entspricht, bei welchem eine Beschädigung und/oder Ausfall des Kaffeeautomaten droht.

Bevorzugt wird mittels des Trestermodels, also mittels der Simulation, der Extraktionsgrad und/oder der Konzentrationsgrad des Kaffeegetränks überwacht und/oder geregelt. Vorstellbar ist es dabei zu ermitteln, ob ein vorgegebenes Kaffeegetränk einen bestimmten Wert des Extraktionsgrad und/oder das Konzentrationsgrad erreichen kann, wobei es denkbar ist, diese jeweils auf einen vorgegebenen Wert zu regeln.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert.

Es zeigen, jeweils schematisch:
- Fig. 1: eine stark vereinfachte, schaltplanartige Darstellung eines Kaffeeautomaten,
- Fig. 2: ein Ablaufdiagramm des erfindungsgemäßen Verfahrens.

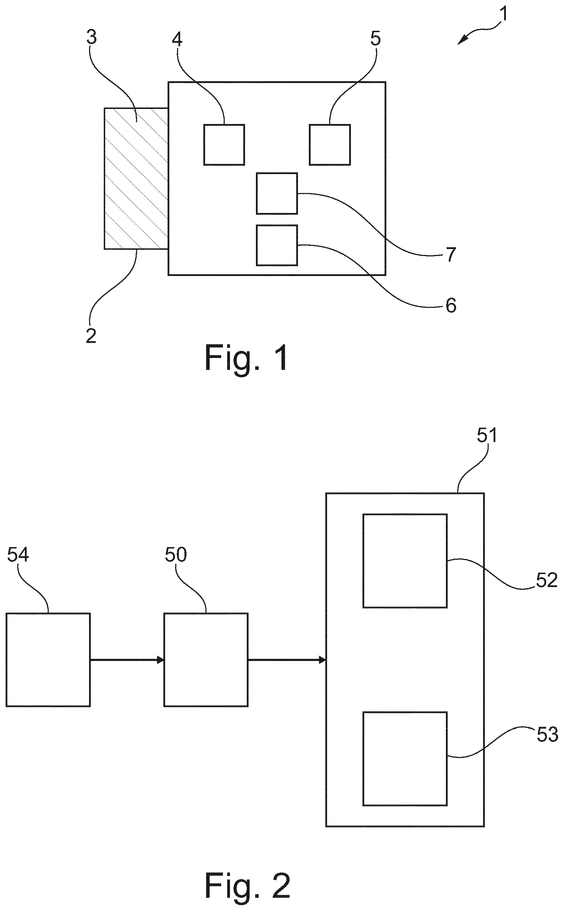

Ein in Figur 1 beispielhaft gezeigter Kaffeeautomat 1 bereitet Kaffeegetränke aus Kaffeepulver (nicht gezeigt) zu. Der Kaffeeautomat 1 umfasst vorteilhaft einen Behälter 2 zum Bevorraten von Kaffeebohnen 3, nachfolgend auch als Bohnenbehälter 2 bezeichnet. Mit den Kaffeebohnen 3 wird vorteilhaft im Kaffeeautomaten 1 ein Kaffeegetränk zubereitet. Zu diesem Zweck wird aus den Kaffeebohnen 2 das Kaffeepulver erzeugt und der Kaffeepulver zur Zubereitung des Kaffeegetränks gebrüht. Der Kaffeeautomat 1 kann unterschiedliche Kaffeegetränke aus den Kaffeebohnen 2 zubereiten. Das Kaffeepulver wird dabei, d.h. bei der Zubereitung des Kaffeegetränks, in einem Behälter 6 des Kaffeeautomaten 1 gepresst, welcher nachfolgend auch als Tresterbehälter 6 bezeichnet wird und z.B. ein Teil einer Brühkammer oder Brüheinheit ist.

Zur Zubereitung des jeweiligen Kaffeegetränks wird der Kaffeeautomat 1 mit entsprechenden Parametern betrieben. Diese Parameter werden nachfolgend auch als Betriebsparameter bezeichnet. Zu den Betriebsparametern gehört im gezeigten Ausführungsbeispiel ein Systemdruck, welcher mittels einer Pumpe 4 des Kaffeeautomaten 1 eingestellt wird. Zu den Betriebsparametern gehört im gezeigten Ausführungsbeispiel eine Temperatur des zur Zubereitung verwendeten Wassers, welche mittels einer Heizung 5 des Kaffeeautomaten 1 eingestellt werden kann. Auch gehören zu den Betriebsparametern im gezeigten Ausführungsbeispiel ein Extraktionsgrad und ein Konzentrationsgrad des Kaffeegetränks aus dem Kaffeepulver. Der Kaffeeautomat 1 kann eine Steuereinrichtung 7 aufweisen, welche zum Ausführen des nachfolgend beschriebenen Verfahrens ausgestaltet ist. Ebenso ist es vorstellbar, das Verfahren zumindest teilweise außerhalb des Kaffeeautomaten 1, beispielsweise in der Cloud (nicht gezeigt) durchzuführen. Entsprechend ist der Kaffeeautomat 1 ausgestaltet. Das Verfahren wird dabei mittels eines entsprechend ausgestalteten Computerprogrammprodukts ausgeführt, welches durch ein Computersystem (nicht gezeigt) auslesbare Anweisungen enthält. Dabei kann das Computersystem zumindest teilweise Bestandteil der Steuereinrichtung 7 sein.

Das Verfahren zum Betreiben des Kaffeeautomaten 1 wird nachfolgend anhand des Ablaufdiagramms der Figur 2 erläutert.

Dabei wird in einer Verfahrensmaßnahme 50 die Zubereitung des Kaffeegetränks mittels eines Trestermodels, vorzugsweise mittels eines 1D-Trestermodels, simuliert. Diese Verfahrensmaßnahme 50 wird nachfolgend auch als Simulationsmaßnahme 50 bezeichnet. Die Simulationsmaßnahme 50 verwendet als Eingangsdaten sowohl statische Daten als auch dynamische Daten. Zu den statischen Daten gehören eine Mahlgradverteilung des Kaffeepulvers, die Sorte der verwendeten Kaffeebohnen 3 und ein Druck bzw. Systemdruck des Kaffeeautomaten 1. Zu den dynamischen Daten gehören eine Pumpenleistung der Pumpe 4, eine Flussmenge bzw. Flussgeschwindigkeit durch den Kaffeeautomaten 1 und die Temperatur.

Das Resultat der Simulationsmaßnahme 50 ist zumindest ein aus der Simulation stammender Parameter zu Zubereitung des Kaffeegetränks, welcher nachfolgend auch als Simulationsparameter bezeichnet wird. Dabei erfolgt in einer Verfahrensmaßnahme 51 das Betreiben des Kaffeeautomaten 1 abhängig von zumindest einem der Simulationsparameter. Die Verfahrensmaßnahme 51 wird nachfolgend auch als Betriebsmaßnahme 51 bezeichnet. Obwohl im Beispiel der Figur 2 die Simulationsmaßnahme 50 der Betriebsmaßnahme 51 vorgelagert ist, kann die Simulationsmaßnahme 50 auch während der Betriebsmaßnahme 51 und/oder nach der Betriebsmaßnahme 51 durchgeführt werden.

Wie Figur 2 entnommen werden kann, umfasst die Betriebsmaßnahme 51 im gezeigten Ausführungsbeispiel zwei mögliche Verfahrensmaßnahmen 52, 53, die alternativ oder in Kombination ausgeführt werden können.

In einer der Verfahrensmaßnahmen 52 wird in der Simulationsmaßnahme 50 ermittelt, ob zumindest ein Betriebsparameter bei der Zubereitung des Kaffeegetränks erreicht werden kann. Es wird also mittels der Simulation ermittelt, ob der zumindest eine Betriebsparameter zulässig ist. Die Verfahrensmaßnahme 52 wird nachfolgend auch als Zulässigkeitsmaßnahme 52 bezeichnet. In der Zulässigkeitsmaßnahme 52 kann die Zubereitung des Kaffeegetränks mit dem Betriebsparameter durchführen, wenn dieser zulässig ist, also, wenn der zugehörige aus der Simulationsmaßnahme 50 stammende Simulationsparameter einen vorgegebenen Rahmen nicht verlässt, wobei der Rahmen durch Komponenten des Kaffeeautomaten 1 oder anderweitig vorgegeben sein kann. Ist ein Betriebsparameter unzulässig, kann dieser aktiv derart angepasst werden, dass er zulässig ist und/oder ein Benutzer über die Unzulässigkeit des Betriebsparameters informiert werden.

In der Verfahrensmaßnahme 53 wird mittels der Simulation der Betrieb das Kaffeeautomaten 1 überwacht. Die Verfahrensmaßnahme 53 wird nachfolgend auch als Überwachungsmaßnahme 53 bezeichnet. In der Überwachungsmaßnahme 53 erfolgt die Überwachung zumindest eines Betriebsparameters sowie der Vergleich des Betriebsparameters mit dem aus der Simulationsmaßnahme 50 stammenden zugehörigen Simulationsparameter. Dabei ist es möglich, bei Abweichungen des Betriebsparameters vom zugehörigen Simulationsparameter eine Änderung des Betriebsparameters einzuleiten und/oder einen Benutzer über die Abweichung zu informieren.

Beispielsweise ist es möglich, für zumindest einen Betriebsparameter, insbesondere für eine Flussgeschwindigkeit und/oder für einen Druck, aus der Simulation jeweils einen zulässigen Maximalwert zu ermitteln. Während der Zubereitung wird dabei ein Ist-Wert des Betriebsparameters überwacht. Überschreitet der Ist-Wert den zugehörigen Maximalwert, kann der Ist-Wert reduziert werden. Wird beispielsweise der Maximalwert der Flussgeschwindigkeit überschritten, kann der Ist-Wert der Flussgeschwindigkeit mittels der Pumpe 4 reduziert, die Pumpe 4 insbesondere deaktiviert, werden. Wird beispielsweise der Maximalwert des Drucks überschritten, kann der Ist-Wert des Drucks mittels der Pumpe 4 und/oder der Heizung 5 reduziert, die Pumpe 4 und/oder die Heizung 5 insbesondere deaktiviert, werden.

Wie Figur 2 entnommen werden kann, kann in einer Verfahrensmaßnahme 54 zumindest ein von einem Benutzer vorgegebene Parameter zur Zubereitung des Kaffeegetränks berücksichtigt werden, wobei dieser Parameter nachfolgend auch als Wunschparameter bezeichnet wird. Die Verfahrensmaßnahme 54 wird nachfolgend auch als Wunschparametermaßnahme 54 bezeichnet. Dabei umfasst die Wunschparametermaßnahme 54 eine entsprechende Vorgabe durch einen Benutzer, beispielsweise mittels einer Eingabe oder einer Einstellung. Der jeweilige zumindest eine Wunschparameter wird in der Simulationsmaßnahme 50 mit einem zugehörigen Simulationsparameter verglichen. Dabei kann der jeweilige Wunschparameter, analog zur vorstehenden Beschreibung, in der Zulässigkeitsmaßnahme 52 auf ihre Zulässigkeit geprüft und der Kaffeeautomat 1 entsprechend betrieben werden.

### Bezugszeichen

- 1: Kaffeeautomat
- 2: Bohnenbehälter
- 3: Kaffeebohnen
- 4: Pumpe
- 5: Heizung
- 6: Tresterbehälter
- 7: Steuereinrichtung

- 50: Simulationsmaßnahme
- 51: Betriebsmaßnahme
- 52: Zulässigkeitsmaßnahme
- 53: Überwachungsmaßnahme
- 54: Wunschparametermaßnahme

## Patentansprüche

1. Verfahren zum Betreiben eines Kaffeeautomaten (1) zur Zubereitung von Kaffeegetränken aus Kaffeepulver, wobei die Zubereitung des Kaffeegetränks mittels eines Trestermodels simuliert wird; wobei aus der Simulation zumindest ein Simulationsparameter der Zubereitung ermittelt und der Kaffeeautomat (1) abhängig vom zumindest einen Simulationsparameter betrieben wird.

2. Verfahren nach Anspruch 1, **dadurch gekennzeichnet, dass** mittels des Trestermodels ein Extraktionsgrad und/oder Konzentrationsgrad des Kaffeegetränks als Simulationsparameter ermittelt wird.

3. Verfahren nach Anspruch 1 oder 2, **dadurch gekennzeichnet, dass** bestimmt wird, ob zumindest einer der wenigstens einen Simulationsparameter bei der Zubereitung des Kaffeegetränks als Betriebsparameter des Kaffeeautomaten (1) erreicht werden kann; dass die Zubereitung des Kaffeegetränks mit dem Betriebsparameter durchgeführt wird, wenn der Simulationsparameter bei der Zubereitung erreicht werden kann.

4. Verfahren nach einem der Ansprüche 1 bis 3, **dadurch gekennzeichnet, dass** ein Benutzer des Kaffeeautomaten (1) einen Wunschparamter zur Zubereitung eines Kaffeegetränks vorgibt, dass mittels des Trestermodels ermittelt wird, ob das Kaffeegetränk mit dem Wunschparameter zubereitet werden kann; und dass das Kaffeegetränk mit dem Wunschparameter zubereitet wird, wenn dieser mit dem Kaffeeautomaten (1) erreicht werden kann.

5. Verfahren nach einem der Ansprüche 1 bis 4, **dadurch gekennzeichnet, dass** mittels des Trestermodels für den Betrieb des Kaffeeautomaten (1) ein zulässiger Maximalwert zumindest eines Betriebsparameters ermittelt werden; dass während der Zubereitung ein Ist-Wert des Betriebsparameters überwacht wird; dass beim Überschreiten des Ist-Werts oberhalb des Maximalwerts der Ist-Wert reduziert wird.

6. Verfahren nach Anspruch 5, **dadurch gekennzeichnet, dass** mittels des Trestermodels ein Maximalwert einer Flussgeschwindigkeit ermittelt und die Flussgeschwindigkeit beim Überschreiten des mittels des Trestermodels ermittelten Maximalwerts reduziert, insbesondere eine Pumpe (4) des Kaffeeautomaten (1) deaktiviert, wird.

7. Verfahren nach Anspruch 5 oder 6, **dadurch gekennzeichnet, dass** mittels des Trestermodels ein Maximalwert eines Drucks im Kaffeeautomaten (1) ermittelt und der Druck beim Überschreiten des Maximalwerts reduziert, insbesondere eine Heizung (5) des Kaffeeautomaten (1) deaktiviert, wird.

8. Verfahren nach einem der Ansprüche 1 bis 7, **dadurch gekennzeichnet, dass** im Trestermodel als Eingangsdaten statische Daten, insbesondere eine Mahlgradverteilung des Kaffeepulvers und/oder die Sorte der verwendeten Kaffeebohnen (3) und/oder einen Systemdruck des Kaffeeautomaten (1), verwendet werden.

9. Verfahren nach einem der Ansprüche 1 bis 8, **dadurch gekennzeichnet, dass** im Trestermodel als Eingangsdaten dynamische Daten, insbesondere eine Pumpenleistung einer Pumpe (4) des Kaffeeautomaten (1) und/oder eine Flussmenge durch den Kaffeeautomaten (1) und/oder die Temperatur, verwendet werden.

10. Verfahren nach einem der Ansprüche 1 bis 9, **dadurch gekennzeichnet, dass** zumindest eines der wenigstens einen Simulationsparameter mittels eines eindimensionalen Trestermodels ermittelt wird.

11. Computerprogrammprodukt, welches durch ein Computersystem auslesbare Anweisungen enthält, derart, dass das Computersystem beim Ausführen des Computerprogrammprodukts das Verfahren nach einem der Ansprüche 1 bis 10 ausführt.

12. Kaffeeautomat (1) zur Zubereitung von Kaffeegetränken aus Kaffeepulver, wobei der Kaffeeautomat (1) eine Steuereinrichtung (7) aufweist, welche derart ausgestaltet ist, dass sie den Kaffeeautomaten (1) gemäß dem Verfahren nach einem der Ansprüche 1 bis 10 betreibt.
